# EUROPÄISCHE PATENTSCHRIFT

(11) **EP 3 254 566 B1**
(45) Veröffentlichungstag und Bekanntmachung des Hinweises auf die Patenterteilung: **19.12.2018**
(21) Anmeldenummer: 16173611.1
(22) Anmeldetag: 08.06.2016
(51) Int. Cl.: A23C 3/03, A23C 9/142, A23C 9/15

(54) **VERFAHREN ZUR HERSTELLUNG GESCHMACKSVERBESSERTER UHT- MILCH**
PROCESS FOR MAKING UHT-MILK WITH IMPROVED TASTE
PROCÉDÉ POUR PRÉPARATION DU UHT-LAIT AVEC GOÛT AMÉLIORÉE

(43) Veröffentlichungstag der Anmeldung: 13.12.2017
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- WO-A1-96/36238
- WO-A1-2008/055592

## Beschreibung

### GEBIET DER ERFINDUNG

Die Erfindung befindet sich auf dem Gebiet der Milchprodukte und betrifft ein Verfahren zur Herstellung einer ultrahocherhitzten, lagerstabilen Milch mit verbesserten Geschmackseigenschaften.

### STAND DER TECHNIK

Unter dem Begriff UHT-Milch versteht der Fachmann eine Milch, die durch Ultrahocherhitzung für einen längeren Zeitraum stabilisiert bzw. konserviert ist. Typischerweise wird dazu Milch in geeigneten Wärmeaustauscherüber einen Zeitraum von wenigen Sekunden auf Temperaturen oberhalb von 100 °C erhitzt und dabei die gesamte Keimfracht zerstört. Anschließend erfolgt die aseptische Abfüllung in entsprechende sterile Gebinde Solche Verfahren sind aus dem Stand der Technik wie beispielsweise der US 4,921,717 (MILK MARKETING BOARD) hinlänglich bekannt.

UHT-Milch zeichnet sich zwar durch eine besonders lange Haltbarkeit aus, infolge der hohen Temperaturbelastung bei der Pasteurisierung entsteht jedoch ein leicht brandiger Geschmack ("Kochgeschmack"), da es zwischen der Lactose und den sensiblen Molkenproteinen zu einer Maillard-Reaktion kommt. Die schlechte geschmackliche Qualität lässt die UHT-Milch für den Verbraucher den Eindruck eines minderwertigen Produktes aufkommen, dem eine "frische" Milch trotz der kurzen Lagerfähig jederzeit vorgezogen wird.

Es hat in der Vergangenheit nicht an Versuchen gemangelt, durch prozessuale Mittel dem Problem der Maillard-Reaktion Herr zu werden. So wird beispielsweise in der DE 10 2005 007557 A1 (TUCHENHAGEN DAIRY) vorgeschlagen, die Pasteurisierung in einem Rohrbündelreaktor mit zwischengelagerten Bypässen zur Heizung und Kühlung vorzunehmen. In der Praxis erweist sich dieses Verfahren jedoch als technisch aufwendig und kann bestenfalls den Umfang der Maillard-Reaktionen verringern, jedoch nicht vollständig verhindern.

Einen anderen Weg schlägt die EP 290206 B1 (DUPONT) vor: dabei wird die Haltbarkeit von Rohmilch durch Zusatz einer Lipidacyltransferase verbessert. Das Additivieren von Milch durch fremde Enzyme, zumal genetisch modifizierte Enzyme, stößt beim Verbraucher auf Ablehnung und ist damit ökonomisch nicht sinnvoll.

WO 2008/055582 A1 (TETRA LAVAL) offenbart ein Verfahren zur Geschmacksverbesserung von haltbarer Milch.

Es bleibt daher ein großes Anliegen der Milchindustrie UHT-Milch mit hoher Lagerfähigkeit und verbesserten 'Geschmackseigenschaften anbieten zu können.

Die Aufgabe der vorliegenden Erfindung hat daher darin bestanden, ein Verfahren zur Verfügung zu stellen, mit dessen Hilfe sich mit möglichst geringem technischen Aufwand eine UHT-Milch erzeugen lässt, die eine hohe Lagerstabilität aufweist, jedoch geschmacklich von einer Rohmilch kaum noch zu unterscheiden ist.

### BESCHREIBUNG DER ERFINDUNG

Die Erfindung betrifft ein Verfahren zur Herstellung einer geschmacksverbesserten UHT-Milch, umfassend die folgenden Schritte:
(a) Bereitstellen einer Rohmilch;
(b) Separieren der Rohmilch in eine Magermilch- und eine Rahmfraktion;
(c) Mikrofiltration der Magermilchfraktion unter Erhalt eines caseinhaltigen Retentats R1 und einer Edelmolke als Permeat P1;
(d) Ultrafiltration der Edelmolke aus Schritt (c) unter Erhalt eines lactose- und mineralreichen Permeats P2 und eines proteinreichen Retentats R2;
(e) Vermischen der Rahmfraktion, des Retentats R1 und des Permeats P2 unter Erhalt einer Mischfraktion M1;
(f) Ultrahocherhitzung der Mischfraktion M1 aus Schritt (e);
(g) Pasteurisierung des Retentats R2 aus Schritt (d); und
(h) Vermischen der ultrahocherhitzten Mischfraktion M1 aus Schritt (f) mit dem pasteurisierten Retentat R2 aus Schritt (g) unter Erhalt des Zielprodukts.

Das erfindungsgemäße Verfahren kann wie folgt zusammengefasst werden:

Im ersten Schritt wird Rohmilch wird im Separator vom Rahm befreit und dieser als separate Fraktion für die weitere Verwendung zwischengelagert. Die so erhaltene Magermilch wird einer Mikrofiltration unterworfen, wobei das Casein über das Retentat abgetrennt wird; in dieser Fraktion befindet sich zudem auch der größte Teil der Keimfracht. Das Permeat stellt eine Edelmolke dar, die neben den temperaturlabilen Molkenproteinen noch Lactose und Mineralien enthält. Diese Fraktion wird einer Ultrafiltration unterworfen, bei der die Lactose und die Mineralien als Permeat abgetrennt werden. Das Retentat enthält nun nur noch die Molkenproteine. Der Rahm, die Caseinfraktion sowie die Lactose/Mineralienfraktion enthalten nur temperaturrobuste Bestandteile und können nach Vereinigung einer UHT-Behandlung unterworfen werden, ohne dass es zu Maillard-Reaktionen kommt, weil die Fraktionen praktisch frei von Proteinen sind. Schließlich vereinigt man die UHT-Fraktion mit dem UF-Permeat und führt eine Standard-Pasteurisierung durch. Die resultierende UHT-Milch enthält nun alle Bestandteile der Rohmilch, durch die auf die Temperaturstabilität abgestimmte Pasteurisierung kommt es jedoch nicht mehr zur Bildung unerwünschter Reaktionsprodukte und die Geschmacksqualität ist deutlich verbessert.

Ein weiterer Vorteil besteht darin, dass man die UHT-Milch aus den Fraktionen wie mit einem Baukasten zusammensetzen kann, um gleichzeitig sowohl unterschiedlichen Geschmacksbedürfnissen als auch ernährungsphysiologischen Anforderungen (z.B. hinsichtlich der Proteinzusammensetzung oder dem Fett- und Lactoseanteil) Rechnung zu tragen. Schließlich kann man die UHT-Milch auch in ein entsprechendes Pulver überführen.

### SEPARATION

Unter Separation wird die Abtrennung des Rahms bis auf einen Fettanteil von etwa 4 Gew.-% sowie die Entfernung von Feststoffen verstanden. Das Verfahren kann sowohl in der Wärme bei einer Temperatur im Bereich von etwa 20 bis etwa 60 °C oder in der Kälte bei einer Temperatur von etwa 8 bis etwa 18 °C durchgeführt werden.

Im erfindungsgemäßen Verfahren ist es von Vorteil, die Separation kalt durchzuführen. Dabei ist es vorteilhaft, wenn die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 18 °C und insbesondere 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Wird die Separation in der Wärme durchgeführt, liegt die bevorzugte Temperatur im Bereich von etwa 35 bis etwa 65 °C und insbesondere etwa 45 bis etwa 55 C.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### MIKRO- ODER DIAFILTRATION

Die Mikro- oder Diafiltration gehört zu den Membrantrennverfahren. Der wesentliche Unterschied zu Ultra- und Nanofiltration besteht in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Nano- oder Ultrafiltration genannt, während die Filtration bei Porengrößen > 0,1 µm, speziell von etwa 0,1 bis 1 µm, gewöhnlich als Mikro- oder Diafiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

Sowohl die Mikro- als auch Diafiltration der Magermilch können im Sinne der vorliegenden Erfindung "heiß" oder "kalt", d.h. im Temperaturbereich von etwa 10 bis etwa 60 °C durchgeführt werden. Bevorzugt ist es jedoch, bei Temperaturen im niedrigen Bereich von etwa 10 bis etwa 20 °C zu arbeiten.

### ULTRAFILTRATION

Zur weiteren Auftrennung wird die bei der Mikrofiltration als Permeat anfallende Edelmolke einer Ultrafiltration unterworfen. Die beiden Filtrationsverfahren unterscheiden sich hinsichtlich ihres Abtrennungsgrades. Liegt die Ausschlussgrenze (oder auch *"Cut-off'*) bei 100 nm oder darüber, spricht man von Mikrofiltration. Liegt die Ausschlussgrenze in dem Bereich zwischen 2-100 nm, bezeichnet man dies als Ultrafiltration.

Die Ausschlussgrenzen von Ultrafiltrationsmembranenen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration kann im Sinne der vorliegenden Erfindung "heiß" oder "kalt", d.h. im Temperaturbereich von etwa 10 bis etwa 60 °C durchgeführt werden. Bevorzugt ist es jedoch, bei Temperaturen im niedrigen Bereich von etwa 10 bis etwa 20 °C zu arbeiten.

### UHT-BEHANDLUNG

Da die Mischfraktion aus Rahm, Casein, Lactose und Mineralien frei von Proteinen ist, kann sie ohne Weiteres drastischen Temperaturbedingungen ausgesetzt werden, unter denen die gesamte Keimfracht, die bei der Mikrofiltration über das Retentat eingebracht worden ist, abgetötet wird. Dies kann beispielsweise in Röhren- oder Durchflussreaktoren erfolgen, wobei Durchlaufzeiten von 1 bis 5 Sekunden und Temperaturen zwischen 100 und 145 °C typisch sind. Bevorzugt sind jedoch zwei Verfahren, die als DSI bzw. Infusion bezeichnet werden.

### Direct Steam Injection (DSI)

In einer ersten alternativen Ausführungsform kann das Produkt auch durch Direct Steam Injection (DSI) pasteurisiert werden. Dies hat den Vorteil, dass das langsame Durchlaufen eines Temperaturbereiches, in dem mesophile und thermophile Sporen optimale Wachstumsbedingungen vorfinden, durch eine blitzartige Erwärmung signifikant verkürzt wird. Dies wird durch die direkte Einspritzung von heißem oder sogar überhitztem Wasserdampf erreicht, der eine Temperatur von 100 bis etwa 250 °C aufweisen kann. Üblicherweise erfolgt dies mit Hilfe von Düsen, die entweder direkt in das Produkt eintauchen oder in einer Ableitung des Wärmeaustauschers eingebaut sind.

Das Prinzip von DSI besteht darin, dass ein unter Druck stehender hocherhitzter Wasserdampfstrahl in eine Düsenkammer geleitet wird und sich dann durch ein perforiertes Rohr ("Radial Steam Jet Diffuser") in das zu erhitzende flüssige Produkt entspannt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Das Ziel besteht darin, das Milchprodukt in sehr kurzer Zeit, vorzugsweise 1 bis etwa 5 Sekunden und insbesondere 1 bis 2 Sekunden auf eine exakte Temperatur einzustellen. Dazu ist es erforderlich, eine möglichst präzise Menge an Dampf mit hoher Geschwindigkeit in das Produkt einzuleiten. Erfolgt die Kontrolle der Dampfmenge über ein Druckminderventil, fällt die Geschwindigkeit des Dampfes in der Regel unter die Schallgeschwindigkeit, was dazu führt, dass sich das Produkt nicht schnell genug erhitzt. Um dies zu verhindern wird der Dampf im Sinne des erfindungsgemäßen Verfahrens vorzugsweise unter so-genannten "choke-flow" Bedingungen eingespeist, weil dies erlaubt, Dampf auch mit Ultraschallgeschwindigkeit direkt in das zu erhitzende Produkt einzuleiten. Hierunter versteht man das Phänomen, die Dampfgeschwindigkeit zu steigern, indem man eine Druckdifferenz mit Hilfe einer speziellen Düse erzeugt. Entsprechende Bauteile sind beispielsweise von der Firma ProSonics im Handel erhältlich.

Die DSI erfordert keine Vorerwärmung des Einsatzstoffes, d.h. das Dialyseprodukt kann unmittelbar verwendet werden. Allerdings ist die Temperaturführung umso präziser, je geringer die Temperaturunterschiede sind.

### Infusion

In einer zweiten alternativen Ausführungsform kann das Produkt auch durch (Dampf-)Infusion pasteurisiert werden. Dieses Verfahren ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt. Seit dem Jahr 2000 hat indes der so genannte PDX-Prozess an Bedeutung gewonnen. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von etwa 100 bis etwa 250 °C und insbesondere etwa 120 bis etwa 150 °C aufweisen, die Infusion benötigt eine Zeit von typisch 1 bis 5 und insbesondere etwa 2 bis 3 Sekunden.

In einer weiteren bevorzugten Ausgestaltung erfolgt die Infusionserwärmung dergestalt, dass Produkt und Dampf abwechselnd über konzentrische Ringdüsen in einen Reaktor versprüht werden, so dass von innen nach außen ein Dampfdruckgradient entsteht. Dadurch werden die Tröpfchen von der Wandung ferngehalten und können nicht verbrennen.

### PASTEURISIERUNG

Das zweite Retentat, welches die Proteine enthält, muss einer Pasteurisierung unterworfen werden, da es sich immer noch auf der "rohen" Seite befindet und bisher noch nicht erhitzt wurde. Diese findet vorzugsweise in Wärmeaustauschern statt, wobei sich speziell Plattenwärmeaustauscher als besonders geeignet erwiesen haben. An den Wärmeaustauschern liegt ein Temperaturgradient an, der jedoch so gewählt ist, dass das Produkt für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### TROCKNUNG

Im einem letzten optionalen Verfahrensschritt kann die UHT-Milch, die durch Vermischen der pasteurisierten Proteinfraktion und der UHT-erhitzen Mischfraktion aus Rahm, Casein, Lactose und Mineralien erhalten wurde, getrocknet werden. Vorzugsweise kommt dabei die Sprühtrocknung zum Zuge, wobei die Temperatur im Einlass typischerweise etwa 180 bis etwa 260 °C und am Ausgang etwa 80 bis etwa 105 °C beträgt. Die UHT-Milch bedarf daher keiner Kühlung bevor sie in den Sprühturm gelangt. Temperaturen von 60 bis 70 °C sind dabei sogar bevorzugt, da auf diese Weise die Gefahr verringert wird, dass die Proteine denaturieren. Hierdurch stellt sich auch eine höhere Leistung der Trocknungsanlage ein, da so die Heißluft nicht mehr zum Anwärmen des Trockungsgutes genutzt werden muss, sondern ausschließlich zum Wasserentzug zur Verfügung steht. Alternativ können die Produkte auch durch Gefriertrocknung entwässert werden.

Der UHT-Milch können vor, vorzugsweise aber nach dem Versprühen auch weitere Zusatzstoffe zugesetzt werden, wie beispielsweise Lactoferrin, Lecithine, Vitamine oder Lebensmittelemulgatoren **[**EP 1314367 A1**,** NESTLE] und dergleichen.

### BEISPIELE

### BEISPIEL 1

330 kg vorgekühlte Rohmilch wurden in einem Separator bei 8 °C von Feststoffen befreit und entrahmt. Dabei fielen 300 kg Magermilch und 30 kg Rahm an, der anschließend durch Ultrahochtemperaturerhitzung pasteurisiert und dann weiterverwertet wurde.

Die Magermilch wurde auf etwa 55 °C erwärmt und dann einer Mikrofiltrationseinheit zugeführt, in der sie zusammen mit 100 kg Diawasser über eine Membran mit einer mittleren Porenweite von 0,1 µm gegeben wurde. Es wurden 66 kg Retentat erhalten, welches zu 90 % aus Casein bestand und auch die gesamte Menge an Glycomakropeptiden (GMP) und Keimen enthielt.

Es wurden 333 kg Edelmolke als Permeat gewonnen, das eine Trockenmasse von etwa 5,5 Gew.-% aufwies. Das Permeat wurde einer Ultrafiltrationseinheit zugeführt und über eine Membran mit einer mittleren Porenweite von 1.500 nm gegeben. Es wurden 300 kg Permeat erhalten, in welchem Lactose und Mineralien enthalten waren, sowie 33 kg Permeat, in welchem die Proteine konzentriert waren.

Die Rahmfraktion sowie das erste Retentat und das zweite Permeat wurden vereinigt. Da diese Fraktion praktisch ausschließlich aus Lipiden, Casein, Lactose und Mineralien bestand und keine Proteine enthielt, konnte sie einer UHT-Behandlung (3 Sekunden, 115 °C) unterworfen werden, ohne dass es zu einer Maillard-Reaktion kam. Die Bedingungen waren zudem ausreichend, um die gesamte Keimfracht, die im ersten Retentat enthalten war, zu zerstören.

Die Proteinfraktion, also das zweite Permeat, wurde unter Standardbedingungen (25 Sekunden, 74 °C) pasteurisiert. Da in dieser Fraktion keine Lactose enthalten war, konnte auch hier keine Maillard-Reaktion ablaufen.

Abschließend wurden die beiden Fraktionen vermischt. Es wurde eine UHT-Milch mit hoher Lagerstabilität erhalten, die geschmacklich von Rohmilch kaum mehr zu unterscheiden war.

### BEISPIEL 2

Die UHT-Milch aus Beispiel 1 wurde auf einen Sprühturm gegeben und bei einer Einlasstemperatur von 150 °C und einer Austrittstemperatur von 105 °C zu einem trockenen Pulver verarbeitet, das noch über eine Restfeuchte von 2 Gew.-% verfügte.

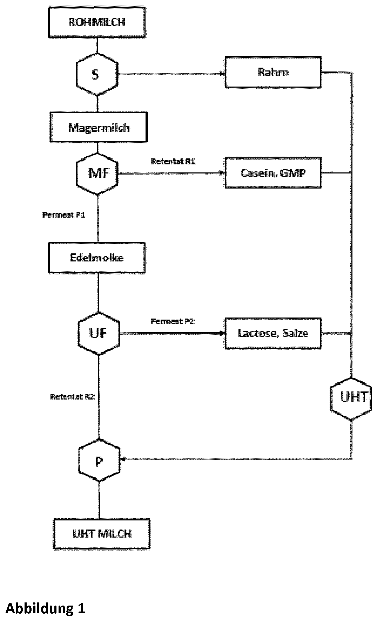

## Patentansprüche

1. Verfahren zur Herstellung einer geschmacksverbesserten UHT-Milch, umfassend die folgenden Schritte:
(a) Bereitstellen einer Rohmilch;
(b) Separieren der Rohmilch in eine Magermilch- und eine Rahmfraktion;
(c) Mikro- oder Diafiltration der Magermilchfraktion unter Erhalt eines caseinhaltigen Retentats R1 und einer Edelmolke als Permeat P1;
(d) Ultrafiltration der Edelmolke aus Schritt (c) unter Erhalt eines lactose- und mineralreichen Permeats P2 und eines proteinreichen Retentats R2;
(e) Vermischen der Rahmfraktion, des Retentats R1 und des Permeats P2 unter Erhalt einer Mischfraktion M1;
(f) Ultrahocherhitzung der Mischfraktion M1 aus Schritt (e);
(g) Pasteurisierung des Retentats R2 aus Schritt (d)
(h) Vermischen der ultrahocherhitzten Mischfraktion M1 aus Schritt (f) mit dem pasteurisierten Rententat R2 aus Schritt (g) unter Erhalt des Zielproduktes.

2. Verfahren nach Anspruch 1, **dadurch gekennzeichnet, dass** man die Separation in der Wärme bei einer Temperatur im Bereich von etwa 20 bis etwa 60 °C durchführt.

3. Verfahren nach Anspruch 1, **dadurch gekennzeichnet, dass** man die Separation in der Kälte bei einer Temperatur im Bereich von etwa 8 bis etwa 18 °C durchführt.

4. Verfahren nach mindestens einem der Ansprüche 1 bis 3, **dadurch gekennzeichnet, dass** man die Mikro- oder Diafiltration mit einer Membran durchführt die einen mittleren Porendurchmesser von etwa 0,1 bis etwa 1 µm aufweist.

5. Verfahren nach mindestens einem der Ansprüche 1 bis 4, **dadurch gekennzeichnet, dass** man die Mikro- oder Diafiltration bei einer Temperatur im Bereich von etwa 10 bis etwa 60 °C durchführt.

6. Verfahren nach mindestens einem der Ansprüche 1 bis 5, **dadurch gekennzeichnet, dass** man die Ultrafiltration mit einer Membran durchführt die einen mittleren Porendurchmesser von etwa 1.000 bis etwa 5.000 nm aufweist.

7. Verfahren nach mindestens einem der Ansprüche 1 bis 6, **dadurch gekennzeichnet, dass** man die Ultrafiltration bei einer Temperatur im Bereich von etwa 10 bis etwa 60 °C durchführt.

8. Verfahren nach mindestens einem der Ansprüche 1 bis 7, **dadurch gekennzeichnet, dass** man die Ultrahocherhitzung über einen Zeitraum von etwa 1 bis etwa 10 Sekunden bei etwa 100 bis etwa 145 °C durchführt.

9. Verfahren nach mindestens einem der Ansprüche 1 bis 8, **dadurch gekennzeichnet, dass** man die Pasteurisierung über einen Zeitraum von etwa 10 bis etwa 20 Sekunden bei einer Temperatur im Bereich von etwa 70 bis etwa 75 °C durchführt.

10. Verfahren nach mindestens einem der Ansprüche 1 bis 9, **dadurch gekennzeichnet, dass** man die geschmacksverbesserte UHT-Milch durch einen Trocknungsschritt in ein trockenes Pulver umwandelt.

## Claims

1. A process for the production of a UHT milk with improved taste characteristics, comprising the following steps:
(a) providing a raw milk;
(b) separating the raw milk into a skimmed milk fraction and a cream fraction;
(c) microfiltration or diafiltration of the skimmed milk fraction, obtaining a casein-containing retentate R1 and a fine whey as permeate P1;
(d) ultrafiltration of the fine whey of step (c), obtaining a permeate P2 that is rich in lactose and minerals, and a protein-rich retentate R2;
(e) mixing the cream fraction, the retentate R1 and the permeate P2, obtaining a mixed fraction M1;
(f) ultra-high temperature treatment of the mixed fraction M1 of step (e);
(g) pasteurization of the retentate R2 of step (d);
(h) mixing the ultra-heat treated fraction M1 of step (f) with the pasteurized retentate R2 of step (g), obtaining the target product.

2. The process according to claim 1, wherein the separation is performed under hot conditions at a temperature in the range from about 20 to about 60 °C.

3. The process according to claim 1, wherein the separation is performed under cold conditions at a temperature in the range from about 8 to about 18 °C.

4. The process according to at least one of claims 1 to 3, wherein the microfiltration or diafiltration is performed with a membrane having an average pore size from about 0.1 to about 1 µm.

5. The process according to at least one of claims 1 to 4, wherein the microfiltration or diafiltration is performed at a temperature in the range from about 10 to about 60 °C.

6. The process according to at least one of claims 1 to 5, wherein the ultrafiltration is performed with a membrane having an average pore size from about 1,000 to about 5,000 nm.

7. The process according to at least one of claims 1 to 6, wherein the ultrafiltration is performed at a temperature in the range from about 10 to about 60 °C.

8. The process according to at least one of claims 1 to 7, wherein the ultra-high temperature treatment is performed for a period from about 1 to about 10 seconds at a temperature in the range from about 100 to about 145 °C.

9. The process according to at least one of claims 1 to 8, wherein the pasteurisation is performed for a period from about 10 to about 20 seconds at a temperature in the range from about 70 to about 75 °C.

10. The process according to at least one of claims 1 to 9, wherein the UHT milk with improved taste characteristics is converted via a drying step to a dry powder.

## Revendications

1. Procédé de fabrication d'un lait UHT à propriétés gustatives améliorées, comprenant les étapes suivantes :
(a) la préparation d'un lait brut ;
(b) la séparation du lait brut en une fraction de lait écrémé et une fraction de crème ;
(c) la micro- ou diafiltration de la fraction de lait écrémé pour obtenir un rétentat contenant de la caséine R1 et un lactosérum noble en tant que perméat P1 ;
(d) l'ultrafiltration du lactosérum noble de l'étape (c) pour obtenir un perméat riche en lactose et en minéraux P2 et un rétentat riche en protéines R2 ;
(e) le mélange de la fraction de crème, du rétentat R1 et du perméat P2 pour obtenir une fraction de mélange M1 ;
(f) le chauffage à température ultra-élevée de la fraction de mélange M1 de l'étape (e) ;
(g) la pasteurisation du rétentat R2 de l'étape (d) ;
(h) le mélange de la fraction de mélange chauffée à température ultra-élevée M1 de l'étape (f) avec le rétentat pasteurisé R2 de l'étape (g) pour obtenir le produit cible.

2. Procédé selon la revendication 1, **caractérisé en ce que** la séparation est réalisée à chaud à une température dans la plage allant d'environ 20 à environ 60 °C.

3. Procédé selon la revendication 1, **caractérisé en ce que** la séparation est réalisée à froid à une température dans la plage allant d'environ 8 à environ 18 °C.

4. Procédé selon au moins l'une quelconque des revendications 1 à 3, **caractérisé en ce que** la micro- ou diafiltration est réalisée avec une membrane qui présente un diamètre de pore moyen d'environ 0,1 à environ 1 µm.

5. Procédé selon au moins l'une quelconque des revendications 1 à 4, **caractérisé en ce que** la micro- ou diafiltration est réalisée à une température dans la plage allant d'environ 10 à environ 60 °C.

6. Procédé selon au moins l'une quelconque des revendications 1 à 5, **caractérisé en ce que** l'ultrafiltration est réalisée avec une membrane qui présente un diamètre de pore moyen d'environ 1000 à environ 5 000 nm.

7. Procédé selon au moins l'une quelconque des revendications 1 à 6, **caractérisé en ce que** l'ultrafiltration est réalisée à une température dans la plage allant d'environ 10 à environ 60 °C.

8. Procédé selon au moins l'une quelconque des revendications 1 à 7, **caractérisé en ce que** le chauffage à température ultra-élevée est réalisé pendant une durée d'environ 1 à environ 10 secondes à une température d'environ 100 à environ 145 °C.

9. Procédé selon au moins l'une quelconque des revendications 1 à 8, **caractérisé en ce que** la pasteurisation est réalisée pendant une durée d'environ 10 à environ 20 secondes à une température dans la plage allant d'environ 70 à environ 75 °C.

10. Procédé selon au moins l'une quelconque des revendications 1 à 9, **caractérisé en ce que** le lait UHT à propriétés gustatives améliorées est transformé en une poudre sèche par une étape de séchage.
